# EUROPÄISCHE PATENTSCHRIFT

(11) **EP 1 515 871 B1**
(45) Veröffentlichungstag und Bekanntmachung des Hinweises auf die Patenterteilung: **09.11.2005**
(21) Anmeldenummer: 03732432.4
(22) Anmeldetag: 21.05.2003
(51) Int. Cl.: B60R 7/04, E05D 15/50

(54) **STAUFACH FÜR EIN FAHRZEUG**
STORAGE COMPARTMENT FOR A VEHICLE
COMPARTIMENT DE RANGEMENT POUR UN VEHICULE

(30) Priorität: 25.06.2002 DE 10228399
(43) Veröffentlichungstag der Anmeldung: 23.03.2005
(73) Patentinhaber: DaimlerChrysler AG, 70567 Stuttgart (DE)
(72) Erfinder: CHALOUPKA, Jürgen, 35083 Wetter (DE); HASENÖHRL, Oliver, 71157 Hildrizhausen (DE); ZIPPERLE, Ralf, 75382 Althengstett (DE)
(74) Vertreter: Wagner, Jürgen
(86) Internationale Anmeldenummer: PCT/EP2003/005305
(87) Internationale Veröffentlichungsnummer: WO 2004/000607

(56) Entgegenhaltungen:
- EP-A- 0 490 468
- EP-A- 0 495 290
- EP-A- 0 501 021
- EP-A- 0 562 244
- US-A- 5 067 625
- US-A- 5 647 652
- US-A- 6 142 333
- US-A1- 2002 002 757

## Beschreibung

Die Erfindung betrifft ein Staufach für ein Fahrzeug nach den Merkmalen des Oberbegriffs des Anspruchs 1, wie z.B. aus US-4-5 067 625 bekannt ist.

In Fahrzeugen, insbesondere Personenkraftwagen besteht das Bedürfnis nach verschließbaren Ablagefächern, die bequem zugänglich sind.

Die EP 501 021 B1 beschreibt ein Ablagefach mit einem Deckel, der sich nach zwei Seiten öffnen lässt. Eine im Deckel angeordnete Getriebevorrichtung stellt dabei sicher, dass nach Entriegelung des Deckels, über ebenfalls im Deckel angeordnete Entriegelungsgriffe, dieser selektiv in die eine oder in die andere Richtung manuell zu öffnen ist. Die Getriebevorrichtung verriegelt dabei die jeweilige andere Schwenkachse infolge der Drehung des Deckels. Nachteilig ist hier die konstruktiv aufwändige Lösung, die den Deckel relativ dick und schwer werden lässt.

Aus der EP 0 495 290 B1 ist ebenfalls ein Ablagefach für Fahrzeuge bekannt, welches einen Deckel aufweist, der nach zwei Seiten zu öffnen ist. Der Deckel weist zu beiden Seiten lösbare Scharniere auf, die verrastend ausgebildet sind. Die Scharniere lagern den Deckel schwenkbar, so dass dieser nach Lösen des Scharniers auf einer Seite eine Schwenkbewegung ausführen kann und manuell zu öffnen ist. Nachteilig ist hier die wenig komfortable Bedienung des Ablagefaches und die relativ groß bauende Scharnierlösung, die den Öffnungsquerschnitt des Ablagefaches verengt.

Es ist Aufgabe der vorliegenden Erfindung, ein Staufach für Fahrzeuge zu schaffen, das eine sichere Unterbringung von Gegenständen ermöglicht, einfach und komfortabel bedienbar ist und dabei möglichst kompakt baut.

Die Aufgabe wird erfindungsgemäß durch ein Staufach nach den Merkmalen des Anspruchs 1 gelöst.

Das Staufach weist ein durch einen Staufachdeckel verschließbares Ablagefach auf. Der Staufachdeckel ist in Schließstellung verriegelt und weist zwei Drehachsen auf, d. h. er kann wahlweise nach der einen oder nach der anderen Seite durch Schwenken um eine Drehachse geöffnet werden. In Schließstellung sind beide Drehachsen des Staufachdeckels verriegelt, so dass das Ablagefach sicher verschlossen ist und die darin abgelegten Gegenstände vor fremdem Zugriff gesichert sind. Das Staufach weist eine Antriebsvorrichtung auf, die den Staufachdeckel nach Lösen der Verriegelung einer Drehachse automatisch öffnet. Durch eine einfache Entriegelung einer Drehachse, vorzugsweise durch Tastendruck, kann der Staufachdeckel automatisch angetrieben geöffnet werden. Dies ermöglicht eine besonders komfortable Bedienung des Staufaches von zwei Seiten aus. So kann das Staufach z. B. in einer Mittelkonsole oder im Cockpitbereich oder in einer Armlehen zwischen zwei Sitzen angeordnet sein und ist von beiden Sitzen aus gleichermaßen bequem zugänglich.

Es ist vorgesehen, dass an einer Seitenwand des Staufaches eine Haltevorrichtung angeordnet ist, die zum Verriegeln beider Drehachsen ausgebildet ist. Dadurch kann der Staufachdeckel möglichst schlank ausgebildet werden, da die Haltevorrichtung außerhalb des Staufachdeckels angeordnet ist. Die Haltevorrichtung kann, um möglichst kompakt zu bauen, auf einer oder zu beiden Seiten des Staufachdeckels angeordnet sein. Bei einem im wesentlichen rechteckig ausgebildeten Staufachdeckel kann die Haltevorrichtung an einer Schmalseite angeordnet sein, um möglichst wenig Bauraum zu beanspruchen.

Ferner kann vorgesehen sein, dass Betätigungstaster zum Entriegeln der Haltevorrichtung im Bereich einer Seitenwand des Staufaches, insbesondere gut zugänglich an deren Oberseite angeordnet sind. So beanspruchen die Betätigungstaster keinen Bauraum im Staufachdeckel und können unabhängig von der Stellung des Staufachdeckels gut erreicht werden.

In einer Ausführung kann vorgesehen sein, dass das Staufach einen Drucker und/oder ein Faxgerät und/oder einen Kopierer aufweist. Dieser kann in einem Ablagefach integriert sein, wobei der aufgeklappte Deckel des Staufaches als Papierstütze für den Drucker und/oder das Faxgerät und/oder den Kopierer ausgebildet ist.

In einer Ausführung kann vorgesehen sein, dass die Antriebsvorrichtung einen Energiespeicher, vorzugsweise Federspeicher oder Gasfederspeicher zum Speichern von Antriebsenergie aufweist. Der Energiespeicher ist vorzugsweise so ausgebildet, dass er beim Schließen des Staufachdeckels geladen wird. Beim Öffnen beaufschlagt er den Staufachdeckel in Öffnungsrichtung und öffnet diesen unter Entladung der gespeicherten Bewegungsenergie. So ist das Staufach von Fremdenergie wie z. B. elektrische Energie weitgehend unabhängig und weist eine besonders hohe Zuverlässigkeit auf. Um eine komfortable Öffnungsbewegung zu erzielen, ist der Energiespeicher mit einer Dämpfungsvorrichtung verbunden, so dass die Öffnungsbewegung gedämpft erfolgt.

Der Energiespeicher ist zweigeteilt ausgebildet, indem jede Drehachse mit einem Energiespeicher verbunden ist. Diese Energiespeicher können separat und unabhängig ausgebildet sein, so dass die Bewegungsenergie einer Drehachse in dem dafür vorgesehenen Energiespeicher gespeichert wird.

In einer Ausführung können die beiden Energiespeicher auch miteinander verbunden sein, so dass jeder Energiespeicher einen Teil der Bewegungsenergie, vorzugsweise etwa die Hälfte, speichert. Dadurch können die beiden Energiespeicher entsprechend kleiner dimensioniert werden. Zudem wird die jeweilige Verriegelung der Drehachse mit einer geringeren Kraft beaufschlagt wodurch auch eine geringere Kraft zum Lösen der Verriegelungsvorrichtung erforderlich ist. Dadurch kann insbesondere ein kurzer Tastenhub bei den Betätigungstasten erzielt werden. Damit wird eine besonders komfortable Bedienung und hohe Wertanmutung erreicht.

Es sind auch Ausführungen möglich, bei denen der Energiespeicher in mehrere Energiespeicher, insbesondere vier, sechs oder acht Energiespeicher aufgeteilt ist, um den vorhandenen Bauraum besonders gut zu nutzen.

Eine Verwendung des Staufachs ist insbesondere bei Straßenfahrzeugen wie z, B. Personenkraftwagen und/oder Lastkraftwagen und/oder Omnibussen vorgesehen. Es ist jedoch auch möglich, das Staufach bei Schiffen oder Flugzeugen einzusetzen.

Weitere Merkmale und Ausführungsformen der Erfindung ergeben sich aus den Ansprüchen, den Figuren und der Figurenbeschreibung. Die vorstehend genannten und nachfolgend aufgeführten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

In den Figuren sind weitere Ausführungen der Erfindung dargestellt und erläutert, dabei zeigen:
- Fig. 1: Schematische Darstellung eines Staufachs in einer Mittelkonsole mit geschlossenem Staufachdeckel,
- Fig. 2: Darstellung des Staufachs mit in einer Richtung geöffnetem Staufachdeckel,
- Fig. 3: Darstellung des Staufachs mit in Gegen-Richtung geöffnetem Staufachdeckel,
- Fig. 4: Ein Staufach mit im Staufachdeckel angeordnetem Energiespeicher,
- Fig. 5: Darstellung des freigeschnittenen Staufachdeckels,
- Fig. 6: Darstellung einer alternativen Ausführung des Staufachdeckels mit einer Zahnstange.

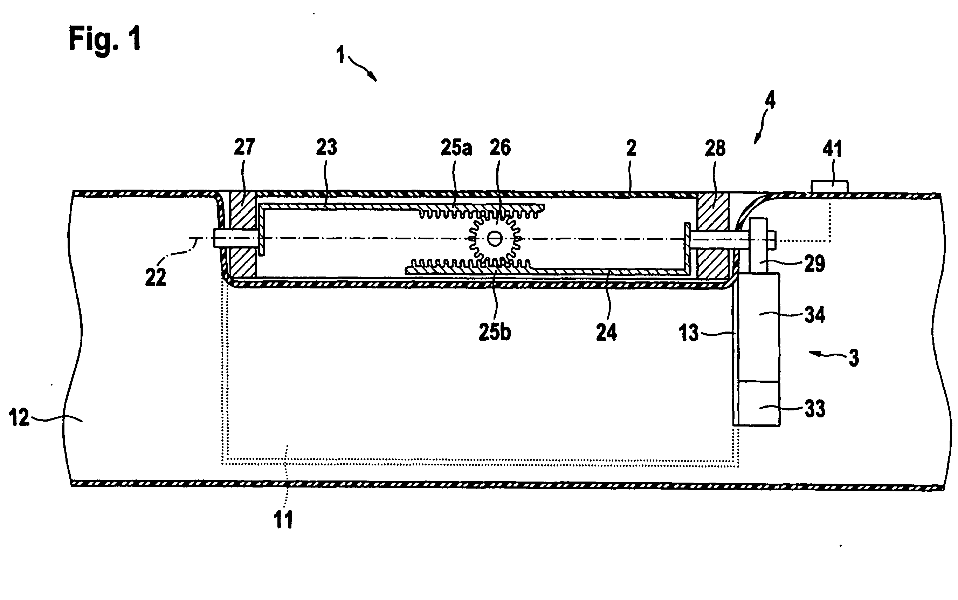

Die **Figur 1** zeigt ein Staufach 1 in einer Mittelkonsole 12 eines Personenkraftwagens. Die Mittelkonsole 12 kann in einem Fahrzeuginnenraum zwischen Fahrersitz und Beifahrersitz angeordnet sein. Das Staufach weist ein Ablagefach 11 zur Aufnahme von Gegenständen auf, welches von Seitenwänden 13 begrenzt ist. Nach oben ist das Staufach 1 durch einen Deckel 2 abgeschlossen. Der Staufachdeckel 2 weist zwei Drehachsen 22, 21 auf, die in Schließstellung mittels einer Haltevorrichtung 4 verriegelt sind. Über an der Oberseite der Mittelkonsole 12 im Bereich einer Seitenwand 13 angeordnete Taster 41 kann die Verriegelung einer Drehachse 21, 22 gelöst werden. Eine Antriebsvorrichtung 3 öffnet den Staufachdeckel dann selbsttätig und gedämpft durch Schwenken des Staufachdeckels 2 entweder um die erste Drehachse 21 oder die zweite Drehachse 22 in Öffnungsrichtung.

Der Staufachdeckel 2 weist im Bereich der Drehachsen 21, 22 jeweils zwei Teilachsen 23, 24 auf. Diese sind am Staufachdeckel 2 linear verschiebbar gelagert und verlaufen längs der jeweiligen Drehachse 21, 22. Sie sind miteinander über Zahnstangen 25a und 25b, die beide mit einem Zahnrad 26 kämmen, verbunden. Das Zahnrad 26 ist am Staufachdeckel drehbar gelagert und verbindet die Teilachsen 23, und 24 gegenläufig. Wird eine Teilachse 23 oder 24 axial beaufschlagt, z. B. in den Staufachdeckel 2 hinein gedrückt, so zieht diese über das Umlenkrad 26 die andere Teilachse 24 bzw. 23 ebenfalls in den Staufachdeckel 2 hinein. Die Teilachsen sind mit einer Feder beaufschlagt und so vorgespannt, dass sie aus dem Staufachdeckel 2 herausragen. Durch Schließen des Staufachdeckels 2 verrasten die Teilachsen 23, 24 selbsttätig, indem sie in Schließstellung des Staufachdeckels 2 über diesen hinaus und in eine Haltevorrichtung 4 hineingreifen.

Die Haltevorrichtung 4 weist zwei Bügel 27 und 28 auf, die an den Stirnseiten des Staufachdeckels 2 angeordnet sind und die beiden Drehachsen 21, 22 miteinander verbinden. Der Bügel 28 greift im Bereich der zweiten Drehachse 22 durch die Seitenwand 13 des Staufachs 1 hindurch und ist mit einer Antriebsvorrichtung 3, welche eine Zahnrad 29 aufweist, drehfest verbunden. Das Zahnrad 29 ist wiederum mit einem Getriebe 34 verbunden, welches einen Federspeicher mit Dämpfer 33 aufweist.

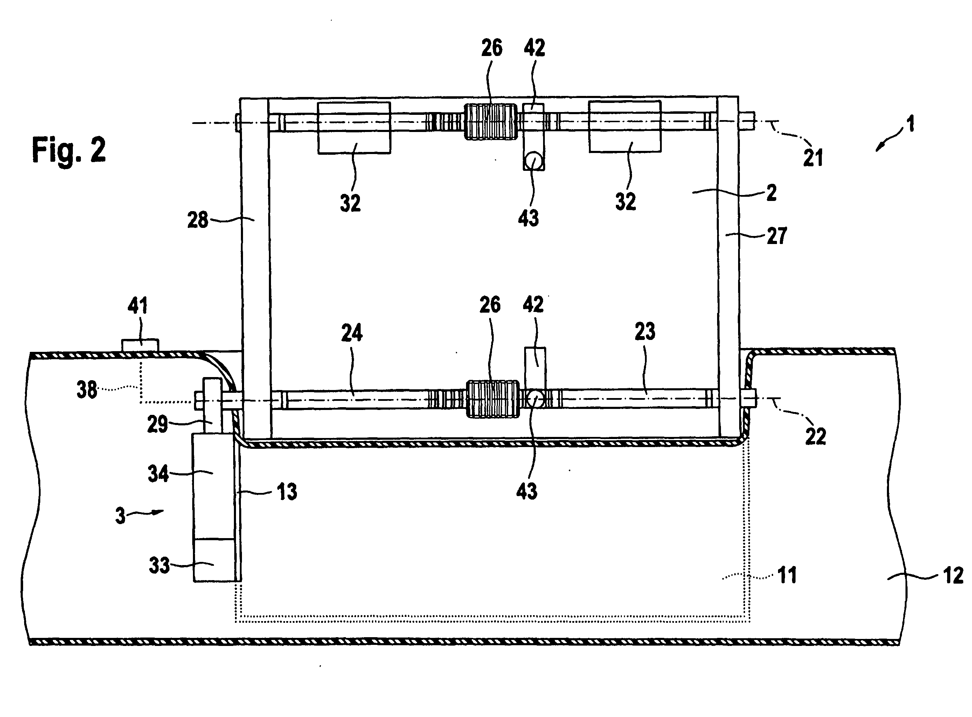

Wird die Verriegelung der ersten Drehachse 21 gelöst, indem die Verbindung zwischen dem Bügel 28 bzw. Bügel 27 und der Seitenwand mittels dem Taster 41 durch axialen Druck auf die Teilachsen 23 und 24 der ersten Drehachse 21 gelöst wird, so schwenkt die Antriebsvorrichtung 3, welche den Energiespeicher mit Dämpfer 33, das Getriebe 34 und das Zahnrad 29 umfasst, den Bügel 28 in Öffnungsrichtung. Da der Bügel 28 auch mit der Teilachse 24 der ersten Drehachse verbunden ist, nimmt er den Staufachdeckel 2 mit und dieser wird um die Drehachse 22 herumgeschwenkt und das Staufach selbsttätig geöffnet, wie in der Figur 2 dargestellt ist.

Im Bereich der Drehachsen 21, 22 ist eine Sperrvorrichtung 42 angeordnet, die verhindert, dass bei geöffneten Staufachdeckel 2 beide Drehachsen 21, 22 entriegelt werden können. In der Sperrvorrichtung 42 ist eine Kugel 43 beweglich geführt, die bei senkrecht stehenden Deckel nach unten fällt und so die lineare Verschiebung der Teilachsen 23, 24 verhindert.

Die beiden Taster 41 sind über einen Bowdenzug mit der ersten Drehachse 21 bzw. der zweiten Drehachse 22 verbunden. Bei Betätigung eines Tasters 41 wird über den Bowdenzug 38 ein axialer Druck auf die Teilachse 24 der entsprechenden Drehachse 21 oder 22 ausgeübt, so dass die gegenläufig verbundenen Teilachsen 23 und 24 in den Staufachdeckel 2 hinein geschoben werden und die entsprechende Drehachse 21 bzw. 22 entriegelt wird.

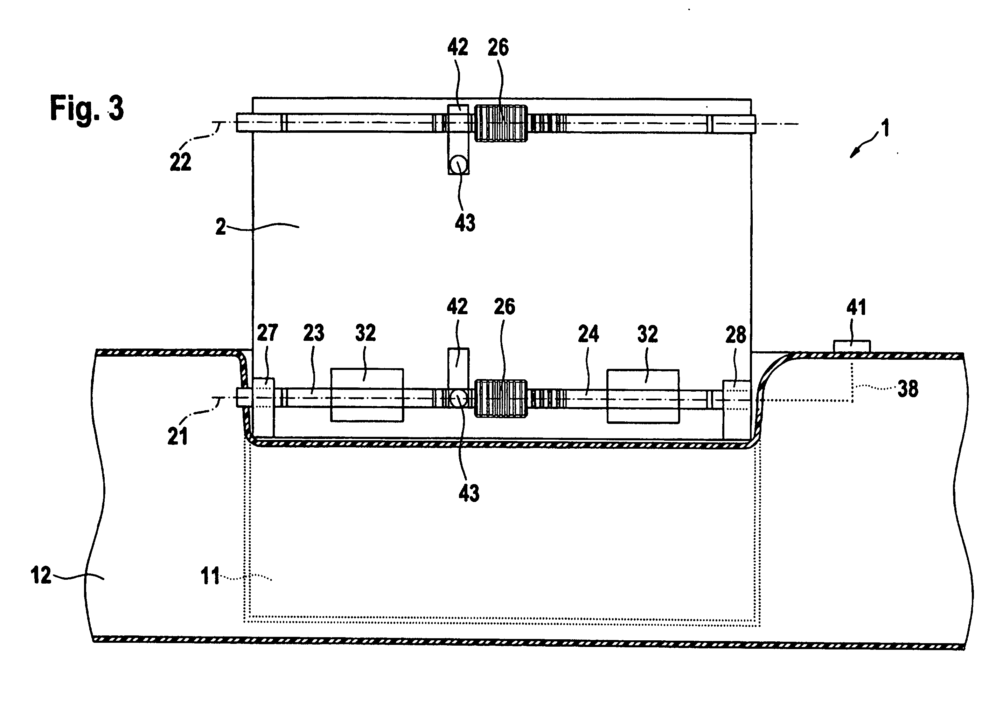

Der Energiespeicher 32 der ersten Drehachse 21 ist im Gegensatz zu dem Energiespeicher 33 der zweiten Drehachse 22 innerhalb des Staufachdeckels 2 angeordnet, wie in Figur 3 dargestellt ist.

Der Energiespeicher der ersten Drehachse 21 ist zweigeteilt, wobei jede Teilachse 23, und 24 mit einem Energiespeicher 32 verbunden sind. Die Energiespeicher 32 weisen jeweils eine um die Achse 23 bzw. 24 gewickelte Feder mit einem Dämpfer auf und wirken zwischen dem Staufachdeckel und den Teilachsen 23, bzw. 24 zum Drehen des Staufachdeckels 2 ein. Die Energiespeicher 32 beaufschlagen den Staufachdeckel 2 in Öffnungsrichtung.

Wird aus der Schließstellung heraus die Verriegelung der zweiten Drehachse 22 gelöst, so drehen die Energiespeicher 32 den Staufachdeckel um die erste Drehachse herum selbsttätig und gedämpft in Offenstellung. Beim Betätigen des Tasters 42 zum Lösen der Verriegelung der zweiten Drehachse wird über einen Bowdenzug 38 ein axialer Druck auf die Teilachse 24 der zweiten Drehachse 22 ausgeübt. Diese wird axial in das Gehäuse des Staufachdeckels 2 hineingeschoben und aus der Haltevorrichtung 4 gelöst. Die Bügel 28 und 27 bleiben mit der Seitenwand 13 des Staufachs 1 verbunden und schwenken beim Lösen der zweiten Drehachse 22, im Gegensatz zu dem oben Beschriebenen Lösen der ersten Drehachse 21, nicht mit dem Staufachdeckel 2 in Öffnungsrichtung mit.

Die Energiespeicher 32 bzw. 33 werden beim manuellen Schließen des Staufachdeckels 2 geladen, indem der -Staufachdeckel gegen die Federkraft der Energiespeicher 32 bzw. 33 geschlossen wird. Dabei wird die Feder des Energiespeichers 32, 33 vorgespannt und verbleibt anschließend bis zum nächsten Öffnungsvorgang gespannt.

Die Komponenten des Staufachdeckels 2 wie z. B. Energiespeicher 32, Teilachsen 23, 24, Zahnrad 26, Sperrvorrichtung 42 sind innerhalb des Staufachdeckels angeordnet und von einer Blende abgedeckt, so dass sie von außen nicht sichtbar sind. Die Blende und die Außenseite des Staufachdeckels ist mit einem Bezug aus Leder oder Stoff oder Holz versehen, um das Design des Staufachs 1 an den Fahrzeuginnenraum anzupassen. Die Komponenten der Haltevorrichtung 4 sind an der Rückseite der Seitenwand angeordnet, so dass sie nicht sichtbar sind. Lediglich die Bedientaster 41 sind an der Oberseite der Mittelkonsole 12 angeordnet, so dass sie gut zugänglich sind.

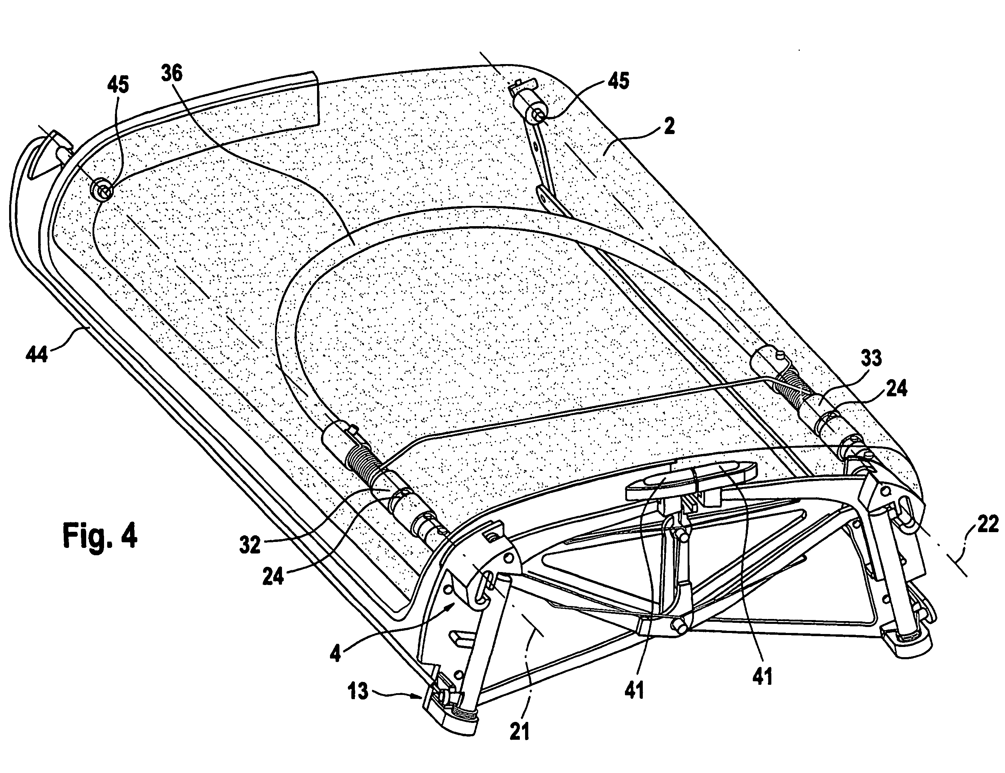

Das in **Figur 4** dargestellte Ausführungsbeispiel zeigt eine Ausführung des Staufachs 1, bei der, im Gegensatz zu dem vorstehend beschriebenen Ausführungsbeispiel, beide Energiespeicher 32 und 33, d. h. der Energiespeicher 32 der ersten Drehachse 21 und der Energiespeicher 33 der zweiten Drehachse 22 innerhalb des Staufachdeckels 2 angeordnet sind. Die Haltevorrichtung 4 mit den beiden Bedientastern 41 zum Aufschwenken des Staufachdeckels 2 ist wie bei dem vorstehend beschriebenen Ausführungsbeispiel außerhalb des Staufachdeckels 2 im Bereich der Seitenwand 13 angeordnet.

Die im Bereich der Drehachse 21 und 22 angeordneten Energiespeicher 32 und 33 sind über eine Welle 36 miteinander verbunden. Die Welle ist innerhalb des Staufachdeckels 2 geführt und überträgt Drehmoment zwischen den beiden Energiespeichern 32 und 33. Jeder Energiespeicher 32 oder 33 speichert einen Teil des zum Schwenken des Staufachdeckels 2 notwendigen Drehmoments, wobei der Ausgleich zwischen den Energiespeichern 23 und 33 über die Welle 36 erfolgt. So können die Energiespeicher 32 und 33 kleiner dimensioniert werden und benötigen dadurch weniger Bauraum. Zudem ist eine geringere Kraft notwendig, um die Energie in dem jeweiligen Energiespeicher 32 oder 33 zu gespeichert zu halten. Dies bewirkt eine geringere Lösekraft beim Entriegeln der jeweiligen Drehachse und damit eine komfortablere, Bedienung durch die Taster 41. Diese Taster 41 können dadurch entsprechend leichtgängig oder mit einem kurzem Tastenhub ausgebildet werden.

Im Bereich der Drehachsen 21 und 22 sind an der Haltevorrichtung 4 zugewandten Seite des Staufachdeckels 2 zwei kurze Teilachsen 24 angeordnet, die mit den Energiespeichern 32 und 33 verbunden sind. Die Energiespeicher 32 und 33 weisen Drahtfedern auf, die auf den Teilachsen 24 gelagert sind und zwischen Staufachdeckel 2 und den Teilachsen 24 eingreifen. Eine Dämpfungsvorrichtung, z. B. eine Viskobremse, ist mit den Energiespeichern 32 und 33 verbunden und dämpft die Öffnungsbewegung des Staufachdeckels 2.

An der von der Haltevorrichtung 4 abgewandten Seite des Staufachdeckels 2, weist dieser im Bereich der Drehachsen 21, 22 Aufnahmen für Steckachsen 45 auf. Die kurzen Steckachsen 45 sind in der Seitenwand des Staufachs 1 linear verschiebbar gelagert. Ein Bowdenzug 44 oder ein Übertragungsgestänge verbindet die Steckachsen 45 mit einem Betätigungstaster 41. Wird ein Taster 41 betätigt und damit die entsprechende Drehachse 21 oder 22 entriegelt, so wirkt der Taster 41 über den Bowdenzug 44 auf die Steckachse 45 und zieht diese aus der Aufnahme des Staufachdeckels 2 zurück. Damit werden beide Seiten des Staufachdeckels 2 im Bereich der Drehachse 21 oder 22 entriegelt, so dass dieser automatisch angetrieben aufschwenken kann.

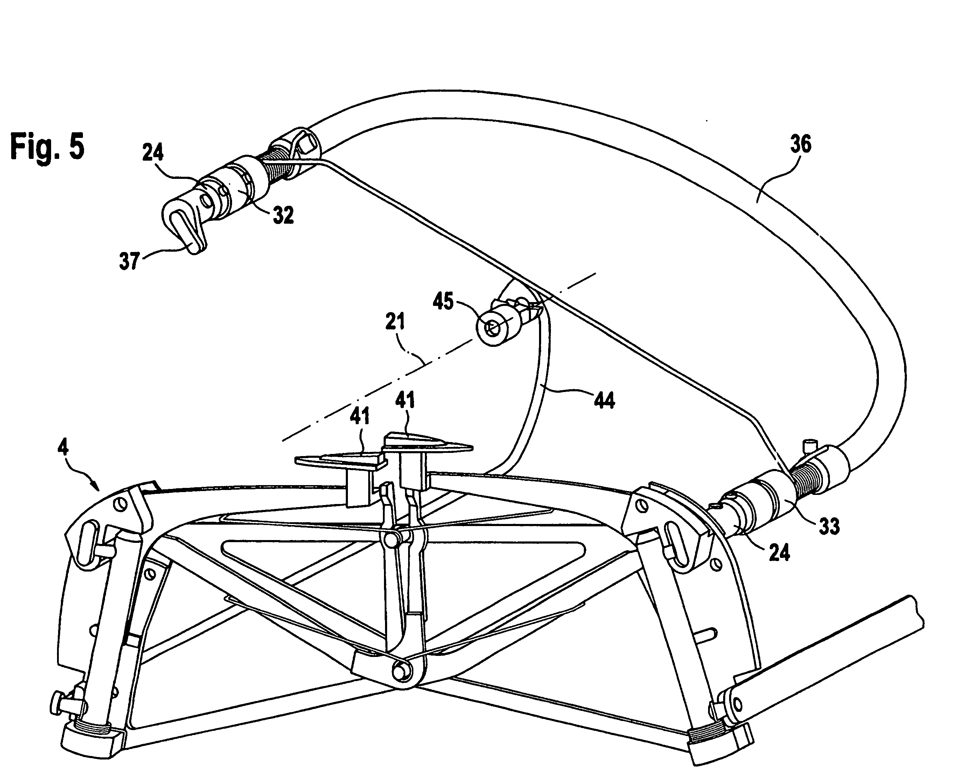

**Figur 5** zeigt eine Offenstellung des Staufachdeckels 2. Der linke Taster 41 Hat die Drehachse 21 wie oben beschrieben entriegelt, so dass der Staufachdeckel, angetrieben von den Energiespeichern 32 und 33, in Offenstellung geschwenkt ist.

Die Teilachse 24 weist an ihrem der Haltevorrichtung 4 zugewandten Ende einen elliptisch geformten Nocken 37 auf. Dieser ist fest mit der jeweiligen Teilachse 24 verbunden und greift über den Staufachdeckel 2 hinaus und in die Haltevorrichtung 4 hinein. Bei verriegelter Drehachse 21, 22 haltert die Haltevorrichtung den Nocken 37 drehfest, indem die Haltevorrichtung 4 dem Nocken formschlüssig umgreift. Somit kann sich die Feder des Energiespeichers 32 oder 33 an der nun drehfest gelagerten Teilachse 24 abstützen und ein Drehmoment auf den Staufachdeckel 2 ausüben oder ein solches aufnehmen.

Die Haltevorrichtung 4 weist einen Aufnahme auf, die den Nocken formschlüssig umgreift. Die Aufnahme ist zweiteilig ausgebildet, wobei das untere Teil fest angeordnet ist und das obere Teil verschiebbar gelagert und mit einem Taster 41 verbunden ist. Bei Betätigung des Tasters 41 wird das obere Teil der Aufnahme zurückgezogen und gibt den Nocken 37 frei. Gleichzeitig zieht der Taster 41 über den Bowdenzug 44 die Steckachse 45 zurück und entriegelt so die entsprechende Drehachse 21 oder 22 vollständig.

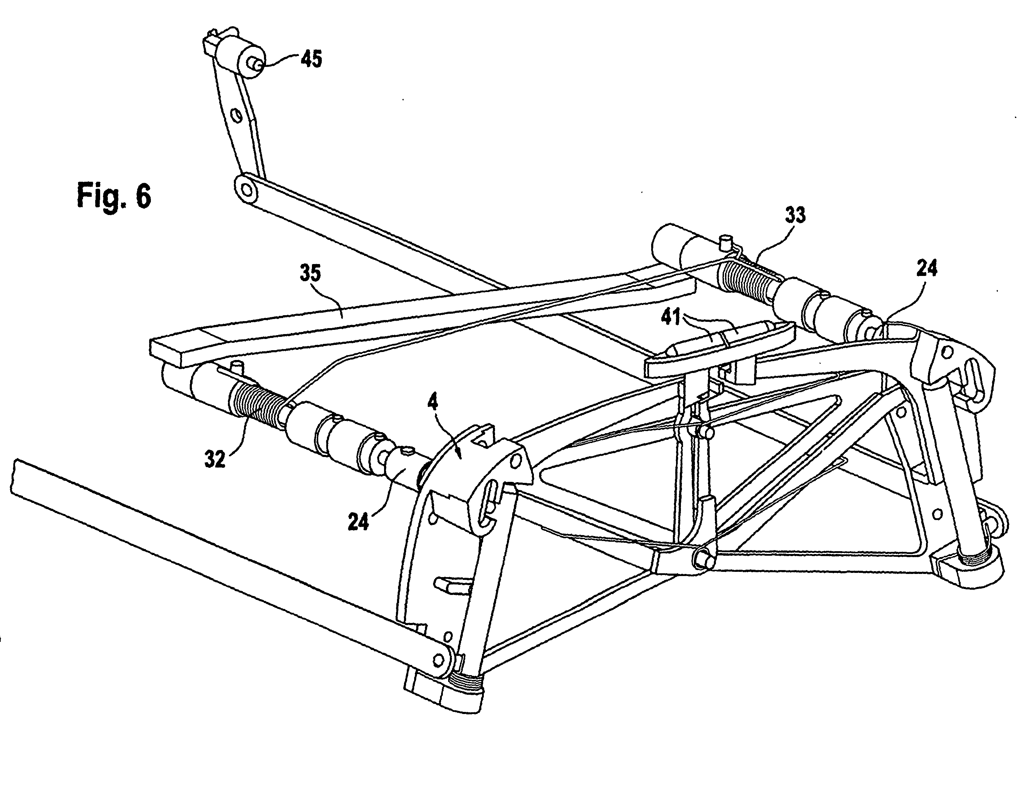

In der **Figur 6** ist ein Ausführungsbeispiel beschrieben, welches weitgehend übereinstimmend mit dem in den Figuren 4 und 5 beschriebenen Ausführungsbeispiel aufgebaut ist. In Abwandlung zu der dort dargestellten Ausführung sim Staufachdeckel 2 aufgenommenen Energiespeicher 32 und 33 hier mit einer Zahnstange 35 verbunden. Die Zahnstange 35 ist in dem Staufachdeckel 2 linear verschiebbar gelagert und kämmt an ihren beiden Enden mit den Teilachsen 24. Somit überträgt die Zahnstange 35 Drehmoment zwischen den Energiespeichern 32 und 33.

## Patentansprüche

1. Staufach für ein Fahrzeug, vorzugsweise für Personenkraftwagen,
mit einem Ablagefach (11) und einem schwenkbar gelagerten Staufachdeckel (2) zum Verschließen des Ablagefachs,
wobei der Staufachdeckel an zwei gegenüberliegenden Längskanten je eine Drehachse (21, 22) aufweist und in zwei Richtungen zu öffnen ist und wahlweise um die eine Drehachse oder die andere Drehachse schwenkt, wobei in Schließstellung des Staufachdeckels (2) beide Drehachsen (21, 22) verriegelt sind und eine Antriebsvorrichtung (3) den Staufachdeckel (2) nach Lösen der Verriegelung einer Drehachse (21 bzw. 22) automatisch angetrieben um die andere Drehachse (22 bzw. 21) in Öffnungsrichtung schwenkt,
**dadurch gekennzeichnet,**
**dass** die Antriebsvorrichtung (3) einen zweigeteilt ausgebildeten Energiespeicher (32, 33) aufweist und jede Drehachse (21, 22) mit einem Energiespeicher (32, 33) verbunden ist und zumindest der Energiespeicher (32) der ersten Drehachse (21) innerhalb des Staufachdeckels (2) angeordnet ist.

2. Staufach nach Anspruch 1,
**dadurch gekennzeichnet,**
**dass** der Energiespeicher (32, 33) beim manuellen Schließen des Staufachdeckels (2) geladen wird und sich beim automatisch angetriebenen Öffnen des Staufachdeckels (2) entlädt.

3. Staufach nach Anspruch 1 oder 2,
**dadurch gekennzeichnet,**
**dass** der Energiespeicher (32, 33) eine Feder mit Dämpfungseinrichtung aufweist, so dass die Öffnungsbewegung gedämpft erfolgt.

4. Staufach nach einem der Ansprüche 1 bis 3,
**dadurch gekennzeichnet,**
**dass** an einer Seitenwand (13) des Ablagefachs (11) eine Haltevorrichtung (4) angeordnet ist, die zum Verriegeln beider Drehachsen (21, 22) ausgebildet ist.

5. Staufach nach Anspruch 4
**dadurch gekennzeichnet,**
**dass** im Bereich der Seitenwand (13) des Ablagefachs (11) ein Entriegelungstaster (41) angeordnet ist, der mit der Haltevorrichtung (4) verbunden ist und mit dieser zum Entriegeln einer Drehachse (21, bzw. 22) zusammenwirkt.

6. Staufach nach Anspruch 4 oder 5,
**dadurch gekennzeichnet,**
**dass** der Staufachdeckel (2) im Bereich der Drehachsen (21, 22) angeordnete Teilachsen (23, 24) aufweist, die entlang der beiden Drehachsen (21, 22) verlaufen und vorzugsweise vorgesehen ist, dass je eine Teilachse (24) sich an einer Seite des Staufachdeckels (2) über diesen hinaus erstreckt und in die Haltevorrichtung (4) zum Verriegeln und/oder Lagern des Staufachdeckels (2) eingreift.

7. Staufach nach einem der Ansprüche 1 bis 6,
**dadurch gekennzeichnet,**
**dass** eine Drehachse (21 bzw. 22) zwei an dem Staufachdeckel (2) entlang der Drehachse (21 bzw. 22) linear verschiebbare Teilachsen (23, 24) aufweist, wobei jede Teilachse (23 bzw. 24) an dem der anderen Teilachse (24 bzw. 23) zugewandten Ende eine Zahnstange (25) aufweist, die über ein Zahnrad (26) mit der Zahnstange (25) der anderen Teilachse (23 bzw. 24) so kämmt, dass sich die Teilachsen (23, 24) gegenläufig bewegen.

8. Staufach nach einem der Ansprüche 1 bis 7,
**dadurch gekennzeichnet,**
**dass** eine Drehachse (21, 22) eine Sperrvorrichtung (42) aufweist, die so ausgebildet ist, dass sie eine Entriegelung der Drehachse (21, 22) bei geöffnetem Staufachdeckel (2) sperrt.

9. Staufach nach einem der Ansprüche 3 bis 8,
**dadurch gekennzeichnet,**
**dass** der Energiespeicher (32) der ersten Drehachse (21) im Staufachdeckel (2) im Bereich der Drehachse (21) angeordnet ist und der Energiespeicher (33) der zweiten Drehachse (22) im Bereich einer Seitenwand (13) des Ablagefachs (11) angeordnet ist.

10. Staufach nach einem der Ansprüche 3 bis 9,
**dadurch gekennzeichnet,**
**dass** die Haltevorrichtung (4) einen beide Drehachsen (21, 22) verbindenden Bügel (28) aufweist, der mit dem Energiespeicher (33) der zweiten Drehachse (22) verbunden ist und den Staufachdeckel (2) nach dem Entriegeln der ersten Drehachse (21) um die zweite Drehachse (22) in Öffnungsrichtung schwenkt.

11. Staufach nach Anspruch 10,
**dadurch gekennzeichnet,**
**dass** der Bügel (27, 28) so ausgebildet ist, dass beim Entriegeln der zweiten Drehachse (22) der Bügel (28) ortsfest an der Seitenwand (13) angeordnet ist und das Drehlager der ersten Drehachse (21) bildet und dass beim Entriegeln der ersten Drehachse (21) der Bügel (27, 28) mit dem Staufachdeckel (2) mitschwenkt.

12. Staufach nach einem der Ansprüche 1 bis 3,
**dadurch gekennzeichnet,**
**dass** der Energiespeicher (32) der ersten Drehachse (21) und der Energiespeicher (33) der zweiten Drehachse (22) im Staufachdeckel (2) aufgenommen ist und vorzugsweise beide Energiespeicher (32, 33) im Bereich der Drehachsen (21, 22) angeordnet sind.

13. Staufach nach Anspruch 12,
**dadurch gekennzeichnet,**
**dass** der Energiespeicher (32) der ersten Drehachse (21) mit dem Energiespeicher (33) der zweiten Drehachse (22) verbunden ist, vorzugsweise mittels einer Zahnstange (35) und/oder einer biegsamen Welle (36), so dass jeweils beide Energiespeicher (32, 33) zum Schwenken des Staufachdeckels (2) um eine Drehachse (21, 22) zusammenwirken.

14. Staufach nach Anspruch 12 oder 13,
**dadurch gekennzeichnet,**
**dass** der Energiespeicher (32, 33) zum Speichern der Energie zu gleichen Teilen in dem Energiespeicher (32) der ersten Drehachse (21) und dem Energiespeicher (33) der zweiten Drehachse (22) ausgebildet ist, indem beim Schwenken des Staufachdeckels (2) die Zahnstange und/oder die biegsamen Welle (36) Energie zwischen den Energiespeichern (32, 33) überträgt.

15. Staufach nach einem der Ansprüche 12 bis 14,
**dadurch gekennzeichnet,**
**dass** die Teilachsen (24) an ihrem über den Staufachdeckel (2) hinausgreifenden Ende einen vorzugsweise elliptisch oder eckig geformten Nocken (37) aufweisen, der bei verriegelter Haltevorrichtung (4) so in diese eingreift, dass die jeweilige Teilachse (24) drehfest in der Haltevorrichtung (4) gelagert ist.

## Claims

1. Storage compartment for a vehicle, preferably for passenger cars, with a depositing compartment (11) and a pivoted storage compartment cover (2) for closing the depositing compartment, the storage compartment cover having a respective axis of rotation (21, 22) on two opposing longitudinal edges and being openable in two directions and pivoting selectively about the one axis of rotation or the other axis of rotation, wherein, in the closed position of the storage compartment cover (2), the two axes of rotation (21, 22) are locked and, after release of the locking of one axis of rotation (21 or 22), a drive device (3) pivots the storage compartment cover (2), driven automatically, about the other axis of rotation (22 or 21) in the opening direction, **characterised in that** the drive device (3) has an energy store (32, 33) that is divided into two and each axis of rotation (21, 22) is connected to an energy store (32, 33) and at least the energy store (32) of the first axis of rotation (21) is arranged inside the storage compartment cover (2).

2. Storage compartment according to claim 1, **characterised in that** the energy store (32, 33) is charged on manual closing of the storage compartment cover (2) and discharges on automatically driven opening of the storage compartment cover (2).

3. Storage compartment according to claim 1 or 2, **characterised in that** the energy store (32, 33) has a spring with a damping device, so the opening movement takes place in a damped manner.

4. Storage compartment according to any one of claims 1 to 3, **characterised in that** a holding mechanism (4) which is configured to lock the two axes of rotation (21, 22) is arranged on a side wall (13) of the depositing compartment (11).

5. Storage compartment according to claim 4, **characterised in that** an unlocking button (41) is arranged in the region of the side wall (13) of the depositing compartment (11) and is connected to the holding mechanism (4) and cooperates with the latter to unlock an axis of rotation (21 or 22).

6. Storage compartment according to claim 4 or 5, **characterised in that** the storage compartment cover (2) has part axes (23, 24) arranged in the region of the axes of rotation (21, 22), which extend along the two axes of rotation (21, 22) and it is preferably provided that a respective part axis (24) extends on one side of the storage compartment cover (2) and beyond it and engages in the holding mechanism (4) to lock and/or mount the storage compartment cover (2).

7. Storage compartment according to any one of claims 1 to 6, **characterised in that** an axis of rotation (21 or 22) has two part axes (23, 24) that are linearly displaceable on the storage compartment cover (2) along the axis of rotation (21 or 22), each part axis (23 or 24) having a toothed rack (25) at the end facing the other part axis (24 or 23), which toothed rack meshes via a toothed wheel (26) with the toothed rack (25) of the other part axis (23 or 24) in such a way that the part axes (23, 24) move in opposite directions.

8. Storage compartment according to any one of claims 1 to 7, **characterised in that** an axis of rotation (21, 22) has a blocking device (42), which is designed such that it blocks unlocking of the axis of rotation (21, 22) when the storage compartment cover (2) is open.

9. Storage compartment according to any one of claims 3 to 8, **characterised in that** the energy store (32) of the first axis of rotation (21) is arranged in the storage compartment cover (2) in the region of the axis of rotation (21) and the energy store (33) of the second axis of rotation (22) is arranged in the region of a side wall (13) of the depositing compartment (11).

10. Storage compartment according to any one of claims 3 to 9, **characterised in that** the holding device (4) has a bracket (28) connecting the two axes of rotation (21, 22), which is connected to the energy store (33) of the second axis of rotation (22) and pivots the storage compartment cover (2), after unlocking of the first axis of rotation (21), about the second axis of rotation (22) in the opening direction.

11. Storage compartment according to claim 10, **characterised in that** the bracket (27, 28) is designed such that, on unlocking of the second axis of rotation (22), the bracket (28) is arranged stationarily on the side wall (13) and forms the pivot bearing of the first axis of rotation (21) and **in that**, on unlocking the first axis of rotation (21), the bracket (27, 28) pivots with the storage compartment cover (2).

12. Storage compartment according to any one of claims 1 to 3, **characterised in that** the energy store (32) of the first axis of rotation (21) and the energy store (33) of the second axis of rotation (22) are received in the storage compartment cover (2) and the two energy stores (32, 33) are preferably arranged in the region of the axes of rotation (21, 22).

13. Storage compartment according to claim 12, **characterised in that** the energy store (32) of the first axis of rotation (21) is connected to the energy store (33) of the second axis of rotation (22), preferably by means of a toothed rack (35) and/or a flexible shaft (36), so, in each case, the two energy stores (32, 33) cooperate to pivot the storage compartment cover (2) about an axis of rotation (21, 22).

14. Storage compartment according to claim 12 or 13, **characterised in that** the energy store (32, 33) is designed to store the energy in equal parts in the energy store (32) of the first axis of rotation (21) and the energy store (33) of the second axis of rotation (22), **in that**, when the storage compartment cover (2) is pivoted, the toothed rack and/or the flexible shaft (36) transmits energy between the energy stores (32, 33).

15. Storage compartment according to any one of claims 12 to 14, **characterised in that** the part axes (24), at their end reaching over the storage compartment cover (2), have a preferably elliptically or angularly formed cam (37), which, when the holding mechanism (4) is locked, engages therein in such a way that the respective part axis (24) is non-rotatably mounted in the holding mechanism (4).

## Revendications

1. Compartiment de rangement pour un véhicule, de préférence pour une véhicule de tourisme, comprenant une boîte à gants (11) et un couvercle (2) du compartiment de rangement monté de façon pivotante et servant à fermer la boîte à gants, où le couvercle du compartiment de rangement présente, respectivement, au niveau de deux bords longitudinaux opposés, un axe de rotation (21, 22), et peut être ouvert dans deux directions et, au choix, pivote autour de l'un des axes de rotation ou autour de l'autre axe de rotation où, en position de fermeture du couvercle (2) du compartiment de rangement, les deux axes de rotation (21, 22) sont verrouillés, et, après déverrouillage d'un axe de rotation (21 ou 22), un dispositif d'entraînement (3) commandé automatiquement fait pivoter le couvercle (2) du compartiment de rangement autour de l'autre axe de rotation (22 ou 21), dans la direction d'ouverture,
**caractérisé en ce que** le dispositif d'entraînement (3) présente un accumulateur d'énergie (32, 33) configuré en deux parties, et chaque axe de rotation (21, 22) est raccordé à un accumulateur d'énergie (32, 33), et au moins l'accumulateur d'énergie (32) du premier axe de rotation (21) est disposé à l'intérieur du couvercle (2) du compartiment de rangement.

2. Compartiment de rangement selon la revendication 1, **caractérisé en ce que** l'accumulateur d'énergie (32, 33) est chargé lors de l'ouverture manuelle du couvercle (2) du compartiment de rangement et se décharge lors de l'ouverture - commandée automatiquement - du couvercle (2) du compartiment de rangement.

3. Compartiment de rangement selon la revendication 1 ou 2, **caractérisé en ce que** l'accumulateur d'énergie (32, 33) présente un ressort à dispositif amortisseur, de sorte que le mouvement d'ouverture se produit de manière amortie.

4. Compartiment de rangement selon l'une quelconque des revendications 1 à 3, **caractérisé en ce que**, sur une paroi latérale (13) de la boîte à gants (11), est disposé un dispositif de retenue (4) qui est conçu pour verrouiller les deux axes de rotation (21, 22).

5. Compartiment de rangement selon la revendication 4, **caractérisé en ce que**, dans la zone de la paroi latérale (13) de la boîte à gants (11), est disposé un bouton-poussoir de déverrouillage (41) qui est relié au dispositif de retenue (4) et fonctionne de manière conjointe avec celui-ci pour le déverrouillage d'un axe de rotation (21 ou 22).

6. Compartiment de rangement selon la revendication 4 ou 5, **caractérisé en ce que** le couvercle (2) du compartiment de rangement présente des axes partiels (23, 24) disposés dans la zone des axes de rotation (21, 22), lesquels axes partiels s'étendent le long des deux axes de rotation (21, 22), et il est prévu, de préférence, à chaque fois, qu'un axe partiel (24) s'étende sur un côté du couvercle (2) du compartiment de rangement, en dépassant de celui-ci, et s'engage dans le dispositif de retenue (4) pour le déverrouillage et/ou pour le logement du couvercle (2) du compartiment de rangement.

7. Compartiment de rangement selon l'une quelconque des revendications 1 à 6, **caractérisé en ce qu'**un axe de rotation (21 ou 22) présente, sur le couvercle (2) du compartiment de rangement, deux axes partiels (23, 24) mobiles de façon linéaire le long de l'axe de rotation (21 ou 22), où chaque axe partiel (23 ou 24) présente, sur l'extrémité tournée vers l'autre axe partiel (24 ou 23), une crémaillère (25) qui, par une roue dentée (26), engrène sur la crémaillère (25) de l'autre axe partiel (23 ou 24), de manière telle que les axes partiels (23, 24) se déplacent en sens opposé.

8. Compartiment de rangement selon l'une quelconque des revendications 1 à 7, **caractérisé en ce qu'**un axe de rotation (21, 22) présente un dispositif de blocage (42) qui est conçu de manière telle, qu'il bloque un déverrouillage de l'axe de rotation (21, 22) lorsque le couvercle (2) du compartiment de rangement est ouvert.

9. Compartiment de rangement selon l'une quelconque des revendications 3 à 8, **caractérisé en ce que** l'accumulateur d'énergie (32) du premier axe de rotation (21) logé dans le couvercle (2) du compartiment de rangement est disposé dans la zone de l'axe de rotation (21), et l'accumulateur d'énergie (33) du second axe de rotation (22) est disposé dans la zone d'une paroi latérale (13) de la boîte à gants (11).

10. Compartiment de rangement selon l'une quelconque des revendications 3 à 9, **caractérisé en ce que** le dispositif de retenue (4) présente une bride de fixation (28) reliant les deux axes de rotation (21, 22), laquelle bride de fixation est reliée à l'accumulateur d'énergie (33) du second axe de rotation (22) et, après le déverrouillage du premier axe de rotation (21), fait pivoter le couvercle (2) du compartiment de rangement autour du second axe de rotation (22), dans la direction d'ouverture.

11. Compartiment de rangement selon la revendication 10, **caractérisé en ce que** la bride de fixation (27, 28) est conçue de manière telle, que lors du déverrouillage du second axe de rotation (22), la bride de fixation (28) soit disposée fixement sur la paroi latérale (13) et forme le coussinet de pivotement du premier axe de rotation (21), et **en ce que**, lors du déverrouillage du premier axe de rotation (21), la bride de fixation (27, 28) pivote en même temps que le couvercle (2) du compartiment de rangement.

12. Compartiment de rangement selon l'une quelconque des revendications 1 à 3, **caractérisé en ce que** l'accumulateur d'énergie (32) du premier axe de rotation (21) et l'accumulateur d'énergie (33) du second axe de rotation (22) sont logés dans le couvercle (2) du compartiment de rangement et, de préférence, les deux accumulateurs d'énergie (32, 33) sont disposés dans la zone des axes de rotation (21, 22).

13. Compartiment de rangement selon la revendication 12, **caractérisé en ce que** l'accumulateur d'énergie (32) du premier axe de rotation (21) est relié à l'accumulateur d'énergie (33) du second axe de rotation (22), de préférence au moyen d'une crémaillère (35) et/ou d'un flexible (36), de sorte qu'à chaque fois, les deux accumulateurs d'énergie (32, 33) fonctionnent de manière conjointe pour le pivotement du couvercle (2) du compartiment de rangement, autour d'un axe de rotation (21, 22).

14. Compartiment de rangement selon la revendication 12 ou 13, **caractérisé en ce que** l'accumulateur d'énergie (32, 33) est conçu pour l'accumulation de l'énergie vers les mêmes pièces dans l'accumulateur d'énergie (32) du premier axe de rotation (21) et dans l'accumulateur d'énergie (33) du second axe de rotation (22), tandis que lors du pivotement du couvercle (2) du compartiment de rangement, la crémaillère et/ou le flexible (36) transmet de l'énergie entre les accumulateurs d'énergie (32, 33).

15. Compartiment de rangement selon l'une quelconque des revendications 12 à 14, **caractérisé en ce que** les axes partiels (24) présentent, au niveau de leur extrémité dépassant du couvercle (2) du compartiment de rangement, une came (37) formée, de préférence, de façon elliptique ou angulaire, laquelle came, lorsque le dispositif de retenue (4) est verrouillé, s'engage dans celui-ci de manière telle, que l'axe partiel respectif (24) soit logé en étant fixe en rotation dans le dispositif de retenue (4).
